# EUROPÄISCHE PATENTSCHRIFT

(11) **EP 1 369 365 B1**
(45) Veröffentlichungstag und Bekanntmachung des Hinweises auf die Patenterteilung: **18.01.2006**
(21) Anmeldenummer: 02405462.9
(22) Anmeldetag: 07.06.2002
(51) Int. Cl.: B65G 53/66, B65G 53/12

(54) **Einrichtung zur pneumatischen Förderung pulverförmiger oder körniger Materialien**
Apparatus for the pneumatic conveyance of powder or granulated materials
Dispositif de transport pneumatique de matériau pulvérulent ou granulé

(43) Veröffentlichungstag der Anmeldung: 10.12.2003
(73) Patentinhaber: Stag AG, CH-7304 Maienfeld (CH)
(72) Erfinder: Gloor, Christian, 9475 Sevelen (CH)
(74) Vertreter: Althoff, Gerhard

(56) Entgegenhaltungen:
- DE-A- 1 962 537
- US-A- 4 355 929

## Beschreibung

Die Erfindung betrifft eine Einrichtung zur pneumatischen Förderung pulverförmiger oder körniger Materialien gemäss dem Oberbegriff des Anspruchs 1.

Aus der DE-A 19 62 537 ist eine ähnliche Einrichtung bekannt, bei welcher das mit Druckluft beaufschlagte Schüttgut von einem auf einem Fahrzeug angeordneten Transportbehälter über eine daran sowie an einem Silobehälter angeschlossene Förderleitung dem Silobehälter zuführbar ist, wobei in der Förderleitung zwischen den beiden Behältern ein mit einer Steuereinheit und mit einem Antrieb in Wirkverbindung stehendes Absperrventil angeordnet ist, welches eine darin angeordnete und über eine angelenkte Schubstange mit dem Antrieb verbundene Verschlussklappe umfasst, wobei die Verschlussklappe bei Beginn der Förderung in die geöffnete Stellung und beim Absinken des Drucks in der Förderleitung in die geschlossene Stellung bewegt wird. Mit dem in der Förderleitung angeordneten Absperrventil wird ein abruptes Abreissen sowie ein vollständiger Unterbruch des Materialstroms erreicht. Eine Reduzierung des Materialstroms ohne denselben vollständig zu unterbrechen sowie geeignete Mittel sind bei dieser Einrichtung nicht vorgesehen.

Weitere Einrichtungen für die pneumatische Förderung staubförmiger oder feinkörniger Schüttgüter in einem Luftstrom sind allgemein bekannt, wobei bei diesen Einrichtungen in der Endphase der Materialförderung der mit Druckluft beaufschlagte erste Behälter (Vorratsbehälter) sowie die angeschlossene Förderleitung sich schlagartig oder abrupt entleeren und infolge davon die im ersten Behälter sowie in der Förderleitung noch vorhandene beziehungsweise die nachströmende Druckluft sich in dem Silobehälter in Form eines sogenannten Endschwalls entspannt. Hierbei kann der zulässige Druck in dem Silobehälter sowie die davon abhängige Belastung des an dem Silobehälter angeordneten Filters unzulässig überschritten werden und infolge davon das staubförmige Material über ein an dem Silobehälter angeordnetes Überdruckventil ungefiltert in die Umgebung (Atmosphäre) entweichen.

Der Erfindung liegt die Aufgabe zugrunde eine Einrichtung der eingangs erwähnten Gattung zu verbessern und so auszubilden, dass bei kontinuierlicher Materialförderung der Druck in dem Silobehälter überwacht und einem entstehenden Überdruck entgegengewirkt wird, ohne dabei den momentanen Materialstrom vollständig zu unterbrechen.

Die erfindungsgemässe Einrichtung ist durch die im kennzeichnenden Teil des Anspruchs 1 angegebenen Merkmale gekennzeichnet.

Hierdurch wird in vorteilhafter Weise erreicht, dass in Abhängigkeit des zulässigen Drucks in dem zu beschickenden Silobehälter der zugeführte Materialstrom sukzessive reduziert und dadurch ein abruptes Abreissen beziehungsweise ein vollständiger Unterbruch des Materialstroms sowie eine unerwünschte Stoss- und/oder Druckbelastung in dem Fördersystem verhindert wird.

Weitere Ausführungsbeispiele und Vorteile der Erfindung ergeben sich aus der nachstehenden Beschreibung in Verbindung mit der Zeichnung und den einzelnen Patentansprüchen.

Die Erfindung wird nachstehend anhand der Zeichnung beschrieben. Es zeigt:
- **Fig.1**: eine schematisch dargestellte Einrichtung zum Fördern pulverförmiger oder körniger Materialien von einem Behälter zu einem über eine Förderleitung damit in Verbindung stehenden Silobehälter;
- **Fig.2**: eine in grösserem Massstab dargestellte und in der Förderleitung angeordnete Drosselvorrichtung mit darin schwenkbar gelagertem Drosselorgan zum Reduzieren des Materialstroms;
- **Fig.3**: die in Draufsicht dargestellte Drosselvorrichtung gemäss Fig.2 mit dem in der Drosselstellung angeordneten Drosselorgan;
- **Fig.4**: ein in grösserem Massstab sowie im Schnitt dargestelltes Teilstück der Drosselvorrichtung gemäss Fig.2 mit den einzelnen Elementen des Drosselorgans;
- **Fig.5**: die in Draufsicht dargestellte Drosselvorrichtung mit dem Drosselorgan gemäss Fig.4;
- **Fig.6**: ein Teilstück der im Schnitt dargestellten Drosselvorrichtung mit einer Variante des Drosselorgans; und
- **Fig.7**: die in Draufsicht und teilweise im Schnitt dargestellte Drosselvorrichtung gemäss Fig.6.

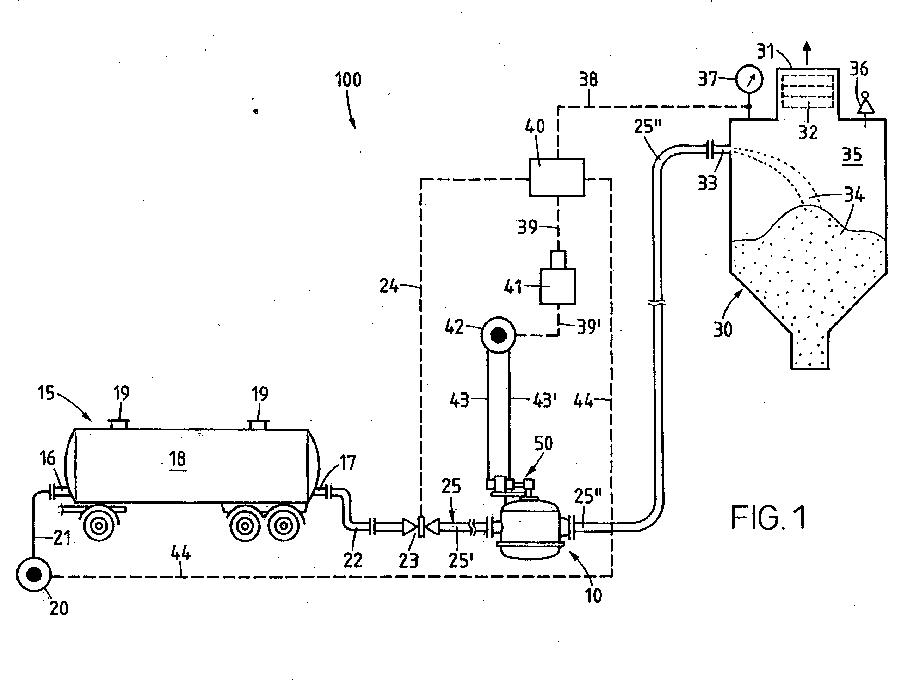

Zur Veranschaulichung der Erfindung ist in Fig.1 eine Einrichtung zum Fördern pulverförmiger oder körniger Materialien dargestellt, wobei die Materialien in an sich bekannter Weise in Form eines mit Druckluft beaufschlagten Materialstroms transportiert werden.

Die in Fig.1 als Ausführungsbeispiel dargestellte Einrichtung 100 umfasst im wesentlichen einen mobilen Behälter 18, eine Förderleitung 25, einen Silobehälter 30 sowie eine Steuereinheit 40. Zwischen dem mobilen Behälter 18 und dem Silobehälter 30 ist in der Förderleitung 25 ein Auslaufschieber 23 sowie eine von dem Material durchströmte Drosselvorrichtung 10 angeordnet. Der Behälter 18 ist beispielsweise auf einem Strassenfahrzeug 15 oder auf einem Schienenfahrzeug angeordnet. Zum Beladen mit pulverförmigen oder körnigen Materialien ist oben an dem Behälter 18 mindestens ein Einfüllstutzen 19 angeordnet. Im dargestellten Ausführungsbeispiel sind oben an dem Behälter 18 zwei im Abstand zueinander angeordnete Einfüllstutzen 19 vorgesehen. Zum Entleeren des Behälters 18 ist an dem einen Ende ein mit einem Flansch versehener Druckstutzen 16 und an dem anderen Ende ein mit einem Flansch versehener Entleerungsstutzen 17 angeordnet. Der Druckstutzen 16 ist über eine erste Leitung 21 an eine erste Energie- oder Druckluftquelle 20 angeschlossen. Der Entleerungsstutzen 17 ist über eine zweite Leitung 22 an ein mit einem Flansch versehenes erstes Teilstück 25' der Förderleitung 25 angeschlossen.

Die in dem dargestellten Ausführungsbeispiel (Fig.1) in zwei Teilstücke 25' und 25" unterteilte Förderleitung 25 steht unter Zwischenschaltung des im ersten Teilstück 25' angeordneten Auslaufschiebers 23 und der nachgeschalteten Drosselvorrichtung 10 über das daran angeschlossene zweite Teilstück 25" mit dem Silobehälter 30 in Verbindung. Zum Beschicken (Füllen) des Silobehälters 30 mit dem pulverförmigen oder körnigen Material 34 ist das zweite Teilstück 25" der Förderleitung 25 an einen mit einem Flansch versehenen und mit dem Innenraum 35 des Silobehälters 30 in Verbindung stehenden Einfüllstutzen 33 angeschlossen.

An dem in Fig.1 schematisch dargestellten Silobehälter 30 ist mindestens ein mit dem Innenraum 35 desselben in Verbindung stehendes Gehäuse 31 zur Aufnahme einer Filtereinheit 32 angeordnet. Weiterhin ist an dem Silobehälter 30 mindestens ein mit dem Innenraum 35 in Verbindung stehendes Überdruckventil 36 sowie mindestens ein Druckmesser, vorzugsweise ein elektronischer Druckmesser 37 angeordnet.

Die in Fig.1 schematisch dargestellte Steuereinheit 40 ist über eine erste elektrische Leitung 38 an den elektronischen Druckmesser 37 und über eine zweite elektrische Leitung 39 an ein Ventil, vorzugsweise an ein Vorsteuerventil 41 angeschlossen. Das Vorsteuerventil 41 ist über eine weitere elektrische Leitung 39' an eine zweite Energie- oder Druckluftquelle 42 angeschlossen. Die zweite Druckluftquelle 42 steht über zwei daran angeschlossene Leitungen 43 und 43' mit einer Antriebsvorrichtung 50 und diese mit der Drosselvorrichtung 10 in Wirkverbindung. Der in dem ersten Teilstück 25' der Förderleitung 25 angeordnete Auslaufschieber 23 ist über eine dritte elektrische Leitung 24 und die erste Druckluftquelle 20 über eine vierte elektrische Leitung 44 an die Steuereinheit 40 angeschlossen.

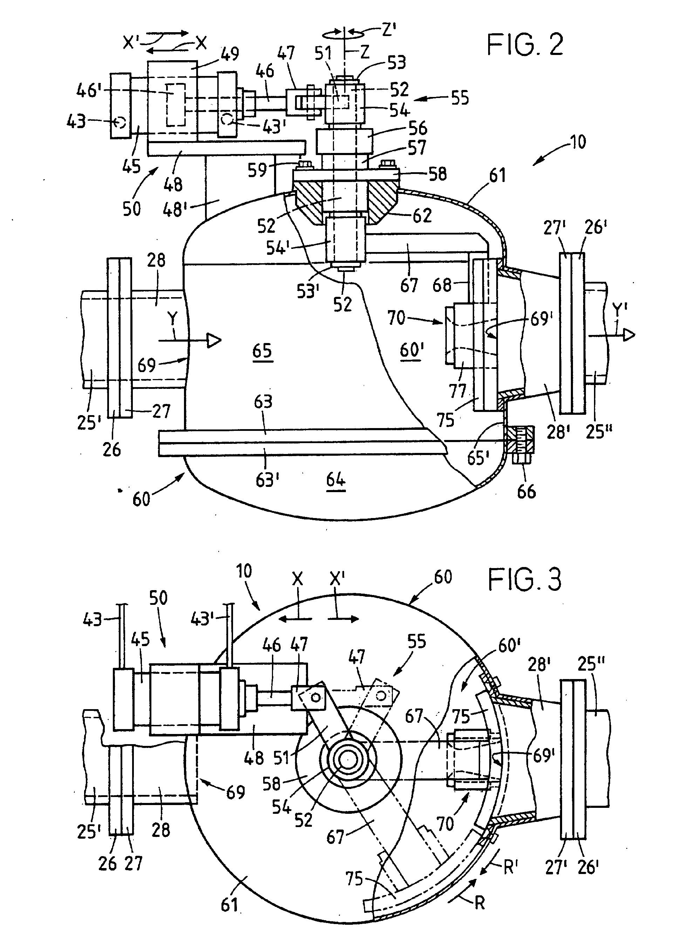

In Fig.2 ist die in der Gesamtheit mit 10 bezeichnete Drosselvorrichtung in grösserem Massstab und teilweise im Schnitt dargestellt. Die Drosselvorrichtung 10 umfasst im wesentlichen ein Gehäuse 60 sowie die daran angeordnete Antriebsvorrichtung 50 für eine damit wirkverbundene Schwenkvorrichtung 55. Mittels der Schwenkvorrichtung 55 wird ein damit in Wirkverbindung stehendes und im Innenraum 60' des Gehäuses 60 angeordnetes Drosselorgan 70 betätigt. Die einzelnen Elemente 50,55, 60 und 70 werden nachstehend beschrieben.

Das Gehäuse 60 umfasst einen oberen Boden 61, ein daran befestigtes zylindrisches Teilstück 65 mit zwei in Strömungsrichtung Y und Y' gegenüberliegend zueinander angeordneten Öffnungen 69 und 69' sowie einen unteren Boden 64. Der untere Boden 64 ist mit einem daran angeordneten Flansch 63' an einem Flansch 63 des zylindrischen Teilstücks 65 abdichtend angeordnet und mittels in Umfangsrichtung verteilter Schraubverbindungen 66 befestigt. Der Innenraum 60' des Gehäuses 60 steht über die im zylindrischen Teilstück 65 vorgesehene Eintrittsöffnung 69 mit einem ersten Rohrstutzen 28 und über die gegenüberliegend angeordnete Austrittsöffnung 69' mit einem zweiten Rohrstutzen 28' in Verbindung.

Der eintrittsseitig an dem zylindrischen Teilstück 65 des Gehäuses 60 angeordnete und mit den Innenraum 60' in Verbindung stehende erste Rohrstutzen 28 hat einen ersten Flansch 27, an welchem das mit einem Flansch 26 versehene erste Teilstück 25' der Förderleitung 25 abdichtend angeordnet und mittels einer Schraubverbindung (nicht dargestellt) befestigt ist. Der austrittsseitig an dem zylindrischen Teilstück 65 des Gehäuses 60 angeordnete sowie mit dem Innenraum 60' in Verbindung stehende zweite Rohrstutzen 28' hat einen zweiten Flansch 27', an welchem das mit einem Flansch 26' versehene zweite Teilstück 25" der Förderleitung 25 abdichtend angeordnet und mittels einer Schraubverbindung (nicht dargestellt) befestigt ist. Der an der Wand 65' des zylindrischen Teilstücks 65 angeordnete zweite Rohrstutzen 28' ist ausgehend von der Austrittsöffnung 69' in Strömungsrichtung Y' konisch verjüngend ausgebildet.

Die Antriebsvorrichtung 50 umfasst eine am oberen Boden 61 des Gehäuses 60 angeordnete und befestigte Stütze 48', eine daran angeordnete Tragplatte 48 sowie einen Lagerbock 49 für einen mit einem Kolben 46' und einer Kolbenstange 46 versehenen Antriebszylinder 45. Am vorderen Ende der Kolbenstange 46 ist ein Gabelstück 47 angeordnet, welches über eine Lasche 51 mit der Schwenkvorrichtung 55 wirkverbunden ist.

Die Schwenkvorrichtung 55 hat eine Führungshülse 57 für einen Achskörper 52 und ist mit einem Flansch 58 und einer SchraubVerbindung 59 an einem im oberen Boden 61 des Gehäuses 60 angeordneten Kopfstück 62 gelagert und befestigt. Weitere in der Führungshülse 57 angeordnete Dicht- und Federelemente (nicht dargestellt) sind durch eine aufschraubbare Kappe 56 gesichert. Am oberen Ende des Achskörpers 52 ist ein erstes Lagerstück 54 angeordnet und durch einen ersten Sicherungsring 53 gehalten. An dem ersten Lagerstück 54 ist die mit dem Gabelstück 47 wirkverbundene Lasche 51 angeordnet und befestigt. An dem in den Innenraum 60' des Gehäuses 60 ragenden stigt. An dem in den Innenraum 60' des Gehäuses 60 ragenden unteren Ende des Achskörpers 52 ist ein zweites Lagerstück 54' angeordnet und durch einen zweiten Sicherungsring 53' gehalten. An dem zweiten Lagerstück 54' ist ein etwa in horizontaler Ebene orientierter Schwenkhebel 67 angeordnet und befestigt.

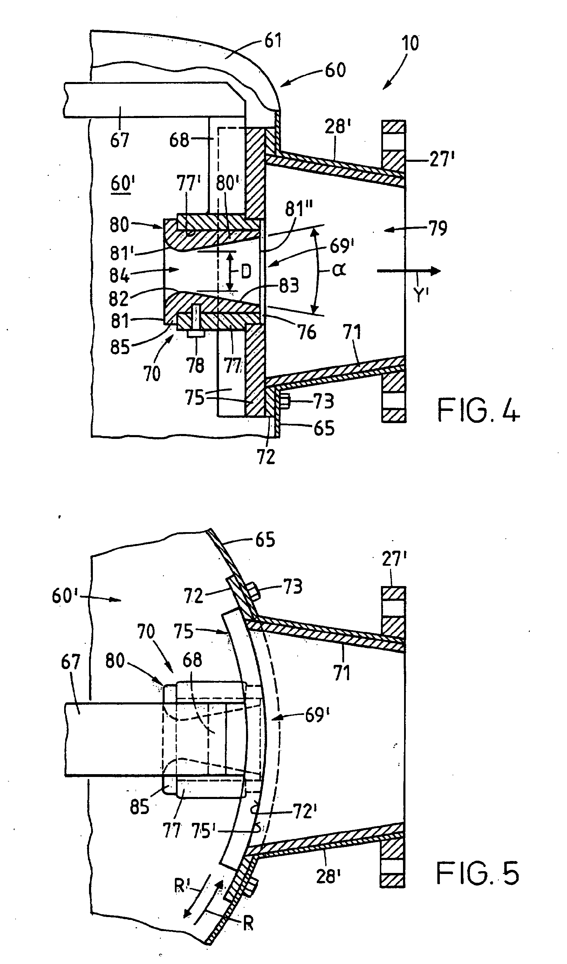

Der an dem zweiten Lagerstück 54' befestigte Schwenkhebel 67 steht über einen daran angeordneten Mitnehmer 68 mit dem Drosselorgan 70 in Wirkverbindung. Das Drosselorgan 70 ist bei der um die vertikale Achse Z des Achskörpers 52 in Doppelpfeilrichtung Z' orientierten Drehbewegung entweder mit der in der Wand 65' des zylindrischen Teilstücks 65 vorgesehenen Austrittsöffnung 69' in Eingriff oder ausser Eingriff bringbar. Das Drosselorgan 70 sowie eine Variante desselben wird jeweils anhand der Figuren 4 bis 7 näher beschrieben.

In Fig.3 ist die Drosselvorrichtung 10 in Draufsicht und teilweise aufgeschnitten dargestellt und man erkennt die an dem oberen Boden 61 des Gehäuses 60 angeordnete Antriebsvorrichtung 50 mit den einzelnen Elementen sowie die damit wirkverbundene Schwenkvorrichtung 55 mit den einzelnen Elementen. Wie in Fig.3 dargestellt, wird bei der in Pfeilrichtung X' orientierten Bewegung der Kolbenstange 46 die Lasche 51 derart um die vertikale Achse Z (Fig.2) des Achskörpers 52 geschwenkt, dass dabei das mit einem Schliessteil 75 der Austrittsöffnung 69' zugeordnete Drosselorgan 70 aus der Drosselstellung (Fig.3) relativ zu der Austrittsöffnung 69' gemäss Pfeilrichtung R' in die Offenstellung (Strich-Punkt-Punkt-Strich) geschwenkt wird. Bei der in Pfeilrichtung X orientierten Bewegung der Kolbenstange 46 und der Lasche 51 wird das Drosselorgan 70 mit dem Schliessteil 75 gemäss Pfeilrichtung R wieder in die Drosselstellung geschwenkt. Das Schliessteil 75 ist entsprechend der Wand 65' des zylindrischen Teilstücks 65 kreisbogenförmig ausgebildet.

Fig.4 zeigt ein in Ansicht und Fig.5 in Draufsicht sowie im Schnitt dargestelltes Teilstück der Drosselvorrichtung 10 und man erkennt das teilweise dargestellte Gehäuse 60 mit dem zweiten Rohrstutzen 28' und dem zweiten Flansch 27' sowie das mit dem Schwenkhebel 67 und dem Mitnehmer 68 wirkverbundene Drosselorgan 70. Die einzelnen Elemente des Drosselorgans 70 werden nachstehend beschrieben.

Das Drosselorgan 70 umfasst das entsprechend der Wand 65' des zylindrischen Teilstücks 65 ausgebildete und mit einer etwa kreisbogenförmig konvex nach aussen gewölbten ersten Gleitfläche 75' (Fig.5) versehene Schliessteil 75. In einer Ausnehmung 76 des Schliessteils 75 ist ein mit einer Durchgangsbohrung 77' versehenes Lagerstück 77 angeordnet und am Schliessteil 75 befestigt. In der Durchgangsbohrung 77' des Lagerstücks 77 ist ein mit einem Anschlagflansch 85 versehener Düsenkörper 80 angeordnet und beispielsweise mittels einer Schraube 78 oder dergleichen gesichert.

Der in Fig.4 im Schnitt dargestellte Düsenkörper 80 umfasst ein längliches Zylindergehäuse 80' sowie den an dem einen Ende daran angeformten Anschlagflansch 85. Weiterhin ist der Düsenkörper 80 mit einem in axialer Richtung orientierten Durchgang 84 versehen. Der Durchgang 84 hat ausgehend von der Eintrittsseite 81 ein konvergent ausgebildetes erstes Teilstück 81', einen daran anschliessenden Düsenhals 82 sowie ein daran anschliessendes und divergent in Richtung der Austrittsseite 81" orientiertes zweites Teilstück 83. Das konvergent ausgebildete zirkuläre Teilstück 81' ist ausgehend von der Eintrittsseite 81 in axialer Richtung bis zu dem Düsenhals 82 kreisbogenförmig ausgebildet. Das an dem Düsenhals 82 anschliessende Teilstück 83 ist vorzugsweise unter spitzem Winkel α in Richtung der Austrittsseite 81" konisch erweiternd ausgebildet. Bei dem dargestellten Ausführungsbeispiel hat der Düsenhals 82 einen Durchmesser D in der Grössenordnung von etwa 40 mm bis 50 mm und ist mit einem Winkel α in der Grössenordnung von etwa 20° bis 25° in Richtung der Austrittsseite 81" konisch erweiternd ausgebildet.

Bei dem in Fig.4 und Fig.5 dargestellten Ausführungsbeispiel ist in der Austrittsöffnung 69' des Gehäuses 60 ein analog dem zweiten Rohrstutzen 28' in Strömungsrichtung Y' konisch verjüngend ausgebildeter und mit einem Innenraum 79 versehener Einsatzkörper 71 angeordnet. Der Einsatzkörper 71 hat, wie in Fig.5 dargestellt, einen innenseitig an der Wand 65' anliegenden zirkulären Flansch 72 und ist mittels in Umfangsrichtung verteilt angeordneter Schraubverbindungen 73 an dem zylindrischen Teilstück 65 des Gehäuses 60 befestigt. Der an dem Einsatzkörper 71 befestigte oder angeformte Flansch 72 ist an der dem Schliessteil 75 des Drosselorgans 70 zugewandten Seite mit einer etwa konkav nach innen gewölbten kreisbogenförmigen zweiten Gleitfläche 72' versehen (Fig.5).

Das mit dem Schliessteil 75 versehene Drosselorgan 70 kann gemäss Pfeilrichtung R' relativ zu dem zweiten Rohrstutzen 28' beziehungsweise zu dem Einsatzkörper 71 aus der Drosselstellung (Fig.5) in die nicht dargestellte Offenstellung und gemäss Pfeilrichtung R wieder zurück in die Drosselstellung geschwenkt werden.

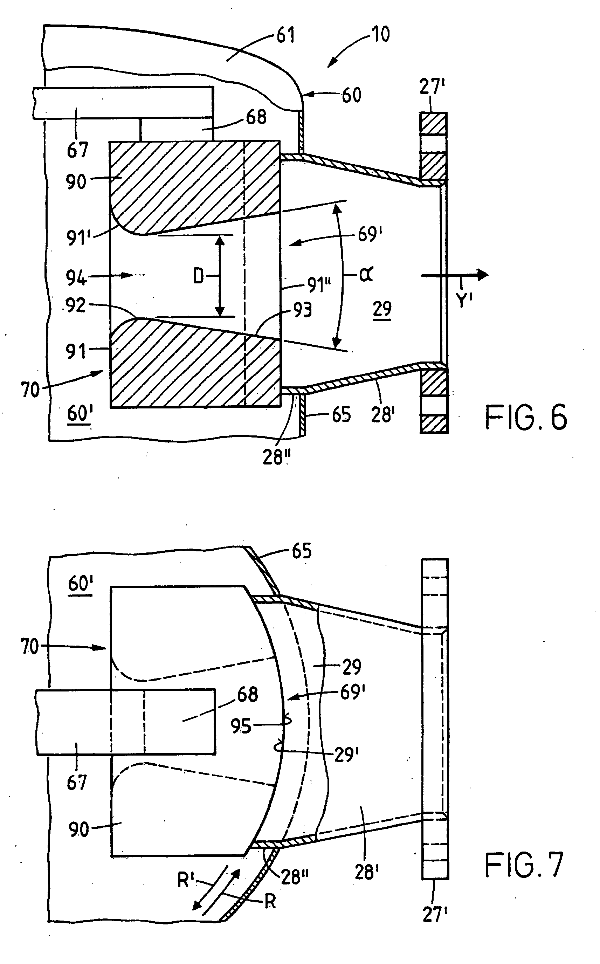

Fig.6 zeigt ein in Ansicht und Fig.7 ein in Draufsicht sowie im Schnitt dargestelltes Teilstück der Drosselvorrichtung 10 und man erkennt das teilweise dargestellte Gehäuse 60 mit dem oberen Boden 61 sowie den an dem zylindrischen Teilstück 65 des Gehäuses 60 angeordneten zweiten Rohrstutzen 28' mit dem zweiten Flansch 27'. Abweichend von dem Ausführungsbeispiel gemäss Fig.4 und Fig.5 ist bei der in Fig.6 und 7 dargestellten Variante das Drosselorgan 70 als einstückiger Düsenkörper 90 ausgebildet, welcher mittels des schematisch dargestellten Mitnehmers 68 an dem Schwenkhebel 67 angeordnet und befestigt ist.

Der in Fig. 6 im Schnitt dargestellte Düsenkörper 90 hat einen in axialer Richtung orientierten Durchgang 94, welcher ausgehend von der Eintrittsseite 91 in axialer Richtung mit einem konvergent ausgebildeten Teilstück 91' und einem daran anschliessenden Düsenhals 92 versehen ist. An dem Düsenhals 92 ist ein divergent in Richtung der Austrittsseite 91" orientiertes Teilstück 93 angeordnet. Das konvergent ausgebildete zirkuläre Teilstück 91' ist ausgehend von der Eintrittsseite 91 in Richtung bis zu dem Düsenhals 92 kreisbogenförmig ausgebildet. Das an dem Düsenhals 92 anschliessende Teilstück 93 ist unter spitzem Winkel α in Richtung der Austrittsseite 91" konisch erweiternd ausgebildet. Bei einer bevorzugten Ausführungsform hat der Düsenhals 92 einen Durchmesser D in der Grössenordnung von etwa 40 mm bis 50 mm und ist mit einem Winkel α in der Grössenordnung von etwa 20° bis 25° in Richtung der Austrittsseite 91" konisch erweiternd ausgebildet.

Der an dem Gehäuse 60 angeordnete und mit dem zweiten Flansch 27' versehene Rohrstutzen 28' ragt bei dem in Fig.6 und Fig.7 dargestellten Ausführungsbeispiel mit einem Teilstück 28" in den Innenraum 60' des Gehäuses 60 und ist an dem zylindrischen Teilstück 65 desselben befestigt. Der mit dem Innenraum 29 versehene zweite Rohrstutzen 28' ist ausgehend von dem vorderen Teilstück 28" beziehungsweise von der gehäuseseitigen Austrittsöffnung 69' in Strömungsrichtung Y' konisch verjüngend ausgebildet.

Der Düsenkörper 90 ist, wie in Fig.7 schematisch dargestellt, an der dem Teilstück 28" des Rohrstutzens 28' zugewandten Seite mit einer etwa kreisbogenförmig konvex nach aussen gewölbten ersten Gleitfläche 95 versehen. Das Teilstück 28" des Rohrstutzens 28' hat an der dem Düsenkörper 90 zugewandten Seite eine korrespondierend zu der ersten Gleitfläche 95 etwa konkav nach innen gewölbte kreisbogenförmige zweite Gleitfläche 29'.

Das mit dem einstückig ausgebildeten Düsenkörper 90 (Fig.6 und Fig.7) versehene Drosselorgan 70 kann gemäss Pfeilrichtung R' relativ zu der zweiten Gleitfläche 29' des zweiten Rohrstutzens 28' aus der Drosselstellung in die nicht dargestellte Offenstellung und gemäss Pfeilrichtung R wieder in die Drosselstellung geschwenkt werden.

Bei der in Fig.1 dargestellten Einrichtung 100 wird das pulverförmige oder körnige Material von dem an die erste Energie- oder Druckluftquelle 20 angeschlossenen Behälter 18 über den austrittsseitigen Stutzen 17 und der Leitung 22 sowie über die Förderleitung 25 und der zugeschalteten Drosselvorrichtung 10 dem Silobehälter 30 zugeführt. Mittels des Druckmessers 37 wird der Druck in dem Silobehälter 30 detektiert und in der Steuereinheit 40 mit dem zulässigen Druck verglichen. Sobald der momentane Druck (beispielsweise beim Entstehen eines sogenannten Endschwalls in dem Silobehälter) einen eingestellten oberen Schaltwert übersteigt wird mittels der Steuereinheit 40 das Vorsteuerventil 41 betätigt und infolge davon die zweite Druckluftquelle 42 derart aktiviert, dass mittels der Antriebsvorrichtung 50 das in der Drosselvorrichtung 10 angeordnete Drosselorgan 70 dem Materialstrom zum Reduzieren desselben zugeführt wird. Bei abnehmendem Druck wird das Drosselorgan 70 mittels der Antriebsvorrichtung 50 wieder aus dem Förderweg des Materialstroms entfernt.

## Patentansprüche

1. Einrichtung zur pneumatischen Förderung pulverförmiger oder körniger Materialien von einem mit Druckluft beaufschlagbaren Behälter, insbesondere von einem auf einem Fahrzeug angeordneten Behälter (18) zu einem über eine Förderleitung (25) damit in Verbindung stehenden Silobehälter (30), wobei in der Förderleitung (25) zwischen den beiden Behältern mindestens eine Drosselvorrichtung (10) angeordnet ist, die ein mit zwei in Strömungsrichtung gegenüberliegend zueinander angeordneten Rohrstutzen (28,28') versehenes Gehäuse (60) sowie ein im Innenraum (60') desselben angeordnetes Drosselorgan (70) umfasst, welches mittels einer Antriebsvorrichtung (50) mit zugeordneter Energiequelle und Steuereinheit betätigbar ist, **dadurch gekennzeichnet, dass** das Drosselorgan (70) an einem in dem Innenraum (60') des Gehäuses (60) angeordneten Schwenkhebel (67) befestigt ist, welcher mittels einer an dem Gehäuse (60) angeordneten Schwenkvorrichtung (55) um eine vertikale Achse (Z) etwa in horizontaler Ebene relativ zu einer in der Gehäusewand (65') angeordneten und mit dem austrittsseitigen Rohrstutzen (28') korrespondierenden Austrittsöffnung (69') bewegbar und beim Überschreiten des zulässigen Innendruchs in dem Silobehälter (30) in dem Materialstrom zum Reduzieren desselben positionierbar und beim Unterschreiten des zulässigen Innendruchs aus dem Materialstrom entfernbar ist.

2. Einrichtung nach Anspruch 1, **dadurch gekennzeichnet, dass** das Gehäuse (60) ein zylindrisches Teilstück (65) mit den gegenüberliegend zueinander angeordneten Rohrstutzen (28,28') aufweist, und dass das im Innenraum (60') des Gehäuses (60) angeordnete Drosselorgan (70) entlang der kreisbogenförmigen Gehäusewand (65') relativ zu der Austrittsöffnung (69') bewegbar ist.

3. Einrichtung nach Anspruch 1, **dadurch gekennzeichnet, dass** mindestens der austrittsseitig an dem Gehäuse (60) angeordnete Rohrstutzen (28') einen in Richtung des Materialstroms konisch verjüngend ausgebildeten Innenraum (79) aufweist.

4. Einrichtung nach Anspruch 3, **dadurch gekennzeichnet, dass** in dem konisch verjüngend ausgebildeten Innenraum (79) des austrittsseitigen Rohrstutzens (28') ein analog konisch verjüngend ausgebildeter Einsatzkörper (71) angeordnet ist, welcher mit einem zirkulären Flansch (72) in dem Innenraum (60') des Gehäuses (60) an der Gehäusewand (65') befestigt ist.

5. Einrichtung nach den Ansprüchen 1 und 2, **dadurch gekennzeichnet, dass** das Drosselorgan (70) an der der Austrittsöffnung (69') zugewandten Seite ein analog der Gehäusewand (65') kreisbogenförmig ausgebildetes Schliessteil (75) aufweist und zusammen mit dem Drosselorgan (70) in dem Innenraum (60') des Gehäuses (60) in horizontaler Ebene entlang der kreisbogenförmigen Gehäusewand (65') relativ zu der Austrittsöffnung (69') bewegbar ist.

6. Einrichtung nach einem der Ansprüche 1 bis 5, **dadurch gekennzeichnet, dass** das Drosselorgan (70) mit einem Düsenkörper (80) versehen ist, welcher ausgehend von einem eingangsseitig angeordneten Düsenhals (82) einen in Richtung des austrittsseitigen Rohrstutzens (28') konisch erweiternd ausgebildeten Durchgang (84) aufweist und auswechselbar an dem Drosselorgan (70) befestigt ist.

7. Einrichtung nach Anspruch 6, **dadurch gekennzeichnet, dass** der in axialer Richtung in dem Düsenkörper (80) angeordnete Durchgang (81) ausgehend von der Eintrittsseite (81) bis zu dem daran anschliessenden Düsenhals (82) mit einem kreisbogenförmig konvergent ausgebildeten ersten Teilstück (81') sowie mit einem daran anschliessenden und in Richtung des austrittsseitigen Rohrstutzens (28') divergent ausgebildeten zweiten Teilstück (83) versehen ist.

8. Einrichtung nach einem der Ansprüche 1 bis 5, **dadurch gekennzeichnet, dass** das Drosselorgan (70) einstückig ausgebildet und mit einem ausgehend von einem vorderen Düsenhals (92) in Richtung des austrittsseitigen Rohrstutzens (28') konisch erweiternd ausgebildeten Durchgang (94) versehen ist.

9. Einrichtung nach Anspruch 8, **dadurch gekennzeichnet, dass** der in axialer Richtung in dem Drosselorgan (70) angeordnete Durchgang (94) ausgehend von der Eintrittsseite (91) bis zu dem daran anschliessenden Düsenhals (92) mit einem kreisbogenförmig konvergent ausgebildeten ersten Teilstück (91') sowie mit einem daran anschliessenden und in Richtung des austrittsseitigen Rohrstutzens (28') divergent ausgebildeten zweiten Teilstück (93) versehen ist.

10. Einrichtung nach einem der Ansprüche 6 bis 9, **dadurch gekennzeichnet, dass** der in dem Düsenkörper (80) beziehungsweise in dem einstückigen Drosselorgan (70) angeordnete Durchgang (84;94) vorgesehene Düsenhals (82;92) einen Durchmesser (D) von etwa 40 mm bis 50 mm aufweist und ausgehend von dem Düsenhals (82;92) mit spitzem Winkel (α) mit etwa 20° bis 25° in Richtung des austrittsseitigen Rohrstutzens (28') konisch erweiternd ausgebildet ist.

## Claims

1. Apparatus for the pneumatic conveyance of powder or granulated materials from a container, which may have compressed air applied to it, particularly from a container (18) positioned on a vehicle to a silo container (30) connected thereto via a conveyor line (25), at least one choke device (10) being positioned in the conveyor line (25) between the two containers, which comprises a housing (60) provided with two pipe joints (28,28') positioned diametrically opposite one another in the flow direction, and a choke unit (70) positioned in the interior (60') thereof, which may be actuated using a drive device (50) having assigned power source and control unit, **characterized in that** the choke unit (70) is attached to a pivot lever (67) positioned in the interior (60') of the housing (60), which is movable using a pivot device (55) positioned on the housing (60) around a vertical axis (Z) approximately in the horizontal plane in relation to an outlet opening (69'), which is positioned in the housing wall (65') and corresponds to the outlet-side pipe joint (28'), and, if the permissible internal pressure in the silo container (30) is exceeded, may be positioned in the material flow to reduce it, and, if the internal pressure falls below the permissible internal pressure, may be removed from the material flow.

2. Apparatus according to Claim 1, **characterized in that** the housing (60) has a cylindrical part (65) having the pipe joints (28,28') positioned diametrically opposite one another, and the choke unit (70) positioned in the interior (60') of the housing (60) is movable along the housing wall (65'), which is in the shape of a circular arc, in relation to the outlet opening (69').

3. Apparatus according to Claim 1, **characterized in that** at least the pipe joint (28') positioned on the housing (60) on the outlet side has an interior (79) implemented as conically tapering in the direction of the material flow.

4. Apparatus according to Claim 3, **characterized in that** in the conically tapering interior (79) of the outlet-side pipe joint (28'), an analogously conically tapering insert body (71) is positioned, which is attached using a circular flange (72) to the housing wall (65') in the interior (60') of the housing (60).

5. Apparatus according to Claims 1 and 2, **characterized in that** the choke unit (70) has a closing part (75), which is implemented in a circular arc analogously to the housing wall (65'), on the side facing toward the outlet opening (69') and is movable together with the choke unit (70) in the interior (60') of the housing (60) in a horizontal plane along the housing wall (65'), which is in the shape of a circular arc, in relation to the outlet opening (69').

6. Apparatus according to one of Claims 1 through 5, **characterized in that** the choke unit (70) is provided with a nozzle body (80), which, starting from a nozzle neck (82) positioned on the inlet side, has a passage (84) implemented as conically expanding in the direction of the outlet-side pipe joint (28') and is replaceably attached to the choke unit (70).

7. Apparatus according to Claim 6, **characterized in that** the passage (81) positioned in the axial direction in the nozzle body (80) is provided, starting from the inlet side (81) up to the adjoining nozzle neck (82), with a first part (81'), implemented convergently in a circular arc, and an adjoining second part (83), which is implemented divergently in the direction of the outlet-side pipe joint (28').

8. Apparatus according to one of Claims 1 through 5, **characterized in that** the choke unit (70) is implemented in one piece and is provided with a passage (94), which is implemented as conically expanding starting from a front nozzle neck (92) in the direction of the outlet-side pipe joint (28').

9. Apparatus according to Claim 8, **characterized in that** the passage (94) positioned in the axial direction in the choke unit (70) is provided, starting from the inlet side (91) up to the adjoining nozzle neck (92), with a first part (91'), which is implemented convergently in the shape of a circular arc, and an adjoining second part (93), which is implemented divergently in the direction of the outlet-side pipe joint (28').

10. Apparatus according to one of Claims 6 through 9, **characterized in that** the nozzle neck (82; 92) provided in the passage (84;94) positioned in the nozzle body (80) and/or in the one-piece choke unit (70) has a diameter (D) of approximately 40 mm to 50 mm and is implemented as conically expanding starting from the nozzle neck (82;92) at an acute angle (α) of approximately 20° to 25° in the direction of the outlet-side pipe joint (28').

## Revendications

1. Installation pour assurer le transport pneumatique de matériau pulvérulent ou granuleux depuis un récipient alimenté en air comprimé, en particulier depuis un récipient (18) placé sur un véhicule, jusqu'à un silo (30) auquel il est relié par l'intermédiaire d'un conduit de transport (25), il y a dans le conduit de transport (25) entre les deux récipients au moins un dispositif d'étranglement (10) qui comprend d'une part un boîtier (60) muni de deux embouts de tube (28,28') placés l'un en face de l'autre dans le sens d'écoulement et d'autre part un organe d'étranglement (70) qui se trouve dans l'espace intérieur (60') du boîtier et qui peut être actionné par un dispositif d'entraînement (50) à l'aide d'une source d'énergie associée et d'une unité de commande, **caractérisée en ce que** l'organe d'étranglement (70) est fixé à un levier pivotant (67), placé dans l'espace intérieur (60') du boîtier (60), qui à l'aide d'un dispositif de pivotement (55) placé sur le boîtier (60) peut se déplacer autour d'un axe vertical (Z) approximativement dans un plan horizontal par rapport à une ouverture de sortie (69') située dans la paroi (65') du boîtier et correspondant à l'embout de tube (28') côté sortie, et l'organe d'étranglement peut être positionné dans le flux de matériau pour réduire le flux de matériau quand la pression admissible est dépassée à l'intérieur du silo (30) et l'organe d'étranglement peut être retiré du flux de matériau quand la pression intérieure admissible n'est pas atteinte.

2. Installation selon la revendication 1, **caractérisée en ce que** le boîtier (60) comporte une portion (65) cylindrique munie d'embouts de tube (28,28') placés l'un en face de l'autre et l'organe d'étranglement (70) situé dans l'espace intérieur (60') du boîtier (60) est mobile par rapport à l'ouverture de sortie (69') le long de la paroi (65') en arc de cercle du boîtier.

3. Installation selon la revendication 1, **caractérisée en ce que** au moins l'embout de tube (28') placé côté sortie sur le boîtier (60) comporte un espace intérieur (79) qui se rétrécit en cône en direction du flux de matériau.

4. Installation selon la revendication 3, **caractérisée en ce que** un corps inséré (71) qui se rétrécit de la même manière en cône est placé dans l'espace intérieur (79) - de l'embout de tube (28') côté sortie - qui se rétrécit en cône et est fixé par une bride (72) circulaire à la paroi de boîtier (65') dans l'espace intérieur (60') du boîtier (60).

5. Installation selon les revendications 1 et 2, **caractérisée en ce que,** du côté orienté vers l'ouverture de sortie (69'), l'organe d'étranglement (70) comporte une pièce de fermeture en arc de cercle analogue à la paroi de boîtier (65') et conjointement avec l'organe d'étranglement (70) elle est mobile dans l'espace intérieur (60') du boîtier (60) par rapport à l'ouverture de sortie (69') dans un plan horizontal le long de la paroi de boîtier (65') en arc de cercle.

6. Installation selon l'une des revendications 1 à 5, **caractérisée en ce que** l'organe d'étranglement (70) comporte un corps de tuyère (80) qui à partir d'un col de tuyère (82) situé côté entrée comporte un passage (84) qui s'évase en cône en direction de l'embout de tube (28') côté sortie et le corps de tuyère est fixé de façon amovible à l'organe d'étranglement (70).

7. Installation selon la revendication 6, **caractérisée en ce que** le passage (84) situé en direction axiale dans le corps de tuyère (80), à partir du côté d'entrée (81) jusqu'au col de tuyère (82) qui le suit, est muni d'une première portion (81') convergente en arc de cercle et ensuite d'une deuxième portion (83) divergente en direction de l'embout de tube (28') côté sortie.

8. Installation selon l'une des revendications 1 à 5, **caractérisée en ce que** l'organe d'étranglement (70) forme une seule pièce et est muni d'un passage (94) qui s'évase en cône en direction de l'embout de tube (28') côté sortie à partir d'un corps de buse (92) avant.

9. Installation selon la revendication 8, **caractérisée en ce que** le passage (94) situé dans le corps de tuyère (70) en direction axiale, à partir du côté d'entrée (91) jusqu'au col de tuyère (92) qui le suit, est muni d'une première portion (91') convergente en arc de cercle et ensuite d'une deuxième portion (93) divergente en direction de l'embout de tube (28') côté sortie.

10. Installation selon l'une des revendications 6 à 9, **caractérisée en ce que** le col de buse (82;92), prévu dans le passage (84;94) situé dans le corps de buse (80) ou dans l'organe d'étranglement (70) en une seule pièce, a un diamètre compris entre environ 40 mm et 50 mm et s'évase en cône à partir du col de buse (82;92) en direction de l'embout de tube (28') côté sortie en faisant un angle aigu (α) compris entre environ 20° et 25°.
